# EUROPEAN PATENT APPLICATION

(11) **EP 4 765 072 A1**
(43) Date of publication of application: **24.06.2026**
(21) Application number: 24907933.6
(22) Date of filing: 09.12.2024
(51) Int. Cl.: G09B 9/00, G09B 5/02, G06F 3/01, G06F 3/048, G06Q 50/20, H01M 10/04

(54) **SIMULATION SYSTEM AND OPERATION METHOD OF SIMULATION SYSTEM**

(30) Priority: 22.12.2023 KR 20230189923
(71) Applicant: LG Energy Solution, Ltd., Seoul 07335 (KR)
(72) Inventor: GU, Kang Min, Daejeon 34122 (KR); LEE, Tae Hee, Daejeon 34122 (KR)
(74) Representative: BCKIP Part mbB
(86) International application number: PCT/KR2024/020040
(87) International publication number: WO 2025/135649

(57) **Abstract**

According to some embodiments, a simulation system includes an interface panel configured to receive a manipulation input from an operator, a main simulator configured to load a training content which reproduces an end of line (EOL) process for manufacturing a cylindrical battery based on the manipulation input and provide the training content to the operator through interaction with the operator, and a display configured to display a specific image according to specific processes of the EOL process.

## Description

### Technical Field

### CROSS-REFERENCE TO RELATED APPLICATION

This application claims priority to and the benefit of Korean Patent Application No. 10-2023-0189923 filed in the Korean Intellectual Property Office on December 22, 2023, the entire contents of which are incorporated herein by reference.

### TECHNICAL FIELD

Embodiments disclosed herein relate to a simulation system and an operating method of the simulation system.

### Background Art

Recently, research and development on secondary batteries has been actively conducted. Here, the secondary battery is a battery capable of charging and discharging and may be construed as including all recent lithium ion batteries such as conventional Ni/Cd batteries and Ni/MH batteries. Among secondary batteries, lithium ion batteries may have a higher energy density than conventional Ni/Cd batteries, Ni/MH batteries, etc. and may be manufactured in a compact and lightweight manner, and thus may have high usability in terms of power sources for mobile devices. Recently, the lithium-ion batteries are attracting attention as a next-generation energy storage medium as a range of use expands to a power source for an electric vehicle.

Since a manufacturing process of the secondary battery includes a plurality of detailed assembly processes and inspection operations, new operators may learn the manufacturing process with the help of experienced operators. However, when there is a lack of skilled operators for a newly introduced process line or when there is a language barrier to operator training in an overseas factory, a simulation that reproduces a battery manufacturing process in the same manner as it is in the real world may be used for operator training. An activation process such as an end of line (EOL) process may be performed to complete the manufacturing of a cylindrical battery. Measurement for electrical characteristic, appearance inspection, packaging of battery cells, and the like may be performed in the EOL process, but operators may need to take a lot of field experience to be familiar with these works.

### Disclosure

### Technical Problem

Embodiments disclosed herein are directed to providing a simulation system capable of training an operator on an end of line (EOL) process for completing manufacturing of a cylindrical battery, and an operating method of the simulation system.

Technical objects of embodiments disclosed herein are not limited to the above-described objects, and other objects that are not described will be able to be clearly understood by those skilled in the art from the following descriptions.

### Technical Solution

According to some embodiments, a simulation system includes an interface panel configured to receive a manipulation input from an operator, a main simulator configured to load a training content which reproduces an end of line (EOL) process for manufacturing a cylindrical battery based on the manipulation input and provide the training content to the operator through interaction with the operator, and a display configured to display a specific image according to specific processes of the EOL process.

According to some embodiments, the specific processes include a first process of measuring internal resistance and an open circuit voltage (OCV) of the cylindrical battery, a second process of inspecting an appearance of the cylindrical battery to sort a good product and a defective product, and a third process of packaging the cylindrical battery through packaging materials.

According to some embodiments, the training content includes a guide content for the specific processes, a virtual operation content for the specific processes, a condition adjustment content for process conditions of the specific processes, and a proficiency test content for the specific processes.

According to some embodiments, the virtual operation content for the second process includes a false defect sorting content which sorts a cylindrical cell which is classified as a good product in the first process but is actually a defective product.

According to some embodiments, the condition adjustment content for the first process includes a parameter adjustment content which adjusts parameters of the first process to adjust a ratio of the cylindrical battery which is actually a defective product but classified as a good product and a ratio of the cylindrical battery which is actually a good product but classified as a defective product.

According to some embodiments, the virtual operation content for the third process includes a content which allows the operator to input packaging materials for packaging the cylindrical battery, a content which represents the input state of the packaging materials input by the operator, and a content which represents a form of a packaging result of the cylindrical battery to be packaged according to the input state.

According to some embodiments, an operating method of a simulation system includes receiving a manipulation input from an operator through an interface panel, loading a training content which reproduces an end of line (EOL) process for manufacturing a cylindrical battery based on the manipulation input through a main simulator, providing the training content to the operator through interaction with the operator through the main simulator, and displaying a specific image according to specific processes of the EOL process through a display.

According to some embodiments, the specific processes include a first process of measuring internal resistance and an open circuit voltage (OCV) of the cylindrical battery, a second process of inspecting an appearance of the cylindrical battery to sort a good product and a defective product, and a third process of packaging the cylindrical battery through packaging materials.

According to some embodiments, the training content includes a guide content for the specific processes, a virtual operation content for the specific processes, a condition adjustment content for process conditions of the specific processes, and a proficiency test content for the specific processes.

According to some embodiments, the virtual operation content for the second process includes a false defect sorting content which sorts a cylindrical cell which is classified as a good product in the first process but is actually a defective product.

According to some embodiments, the condition adjustment content for the first process includes a parameter adjustment content which adjusts parameters of the first process to adjust a ratio of the cylindrical battery which is actually a defective product but classified as a good product and a ratio of the cylindrical battery which is actually a good product but classified as a defective product.

According to some embodiments, the virtual operation content for the third process includes a content which allows the operator to input packaging materials for packaging the cylindrical battery, a content which represents the input state of the packaging materials input by the operator, and a content which represents a form of a packaging result of the cylindrical battery to be packaged according to the input state.

### Advantageous Effects

According to the embodiments disclosed herein, it is possible to provide the simulation system capable of training an operator on the end of line (EOL) process for completing the manufacturing of the cylindrical battery, and the operating method of the simulation system.

Technical effects according to the embodiments disclosed herein are not limited to the above-described effects, and other effects that are not described will be able to be clearly understood by those skilled in the art according to the disclosure of the present document.

### Description of Drawings

FIG. 1 illustrates elements constituting a training system according to some embodiments.
FIG. 2 illustrates elements constituting a simulation system according to some embodiments.
FIG. 3 illustrates a structure of the simulation system according to some embodiments.
FIG. 4 illustrates specific processes of an end of line (EOL) process according to some embodiments.
FIG. 5 illustrates a training content provided by the simulation system according to some embodiments.
FIG. 6 illustrates operations forming a method of a simulation system according to some embodiments.

### Mode for Invention

Hereinafter, embodiments disclosed herein will be described with reference to the accompanying drawings. However, it should be understood that this is not intended to limit the disclosure of the present document to specific embodiments and includes various modifications, equivalents, and/or alternatives of the embodiments described herein.

It should be understood that the embodiments of the present document and the terms used herein are not intended to limit the technical features described herein to specific embodiments and include various modifications, equivalents, or substitutes of the corresponding embodiments. In the description of the drawings, similar reference numerals may be used for similar or related components. The singular form of a noun corresponding to an item may include one item or a plurality of items unless the relevant context clearly dictates otherwise.

In the present document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. Terms such as "first," "second," "first," "second," "A," "B," "(a)," or "(b)" may simply be used to distinguish the corresponding component from another and do not limit the corresponding components in another aspect (e.g., importance or order).

In the present document, when a certain (e.g., a first) component is described as being "coupled," "connected," or "joined" to another (e.g., a second) component with or without the terms "functionally" or "communicatively" or "coupled" or "connected," this means that the certain component may be connected to another component directly (e.g., in a wired or wireless manner) or indirectly (e.g., through a third component).

A method according to various embodiments disclosed herein may be provided by being included in a computer program product. The computer program product may be traded between sellers and buyers as commodities. The computer program product may be distributed in the form of a device-readable storage medium (e.g., a compact disc read only memory (CD-ROM)) or distributed (e.g., downloaded or uploaded) through application stores or directly online between two user devices. In the case of the online distribution, at least some of the computer program products may be at least temporarily stored or temporarily generated in a device-readable storage medium such as a memory of a server of a manufacturer, a server of an application store, or a relay server.

According to the embodiments disclosed herein, each component (e.g., a module or program) of the above-described components may include a single object or a plurality of objects, and some of the plurality of objects may be separately disposed in another component. According to the embodiments disclosed herein, one or more of the above-described corresponding components or operations may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to the embodiments disclosed herein, operations performed by modules, programs, or other components may be executed sequentially, in parallel, repeatedly, or heuristically, or one or more of the operations may be executed in a different order or omitted, or one or more other operations may be added.

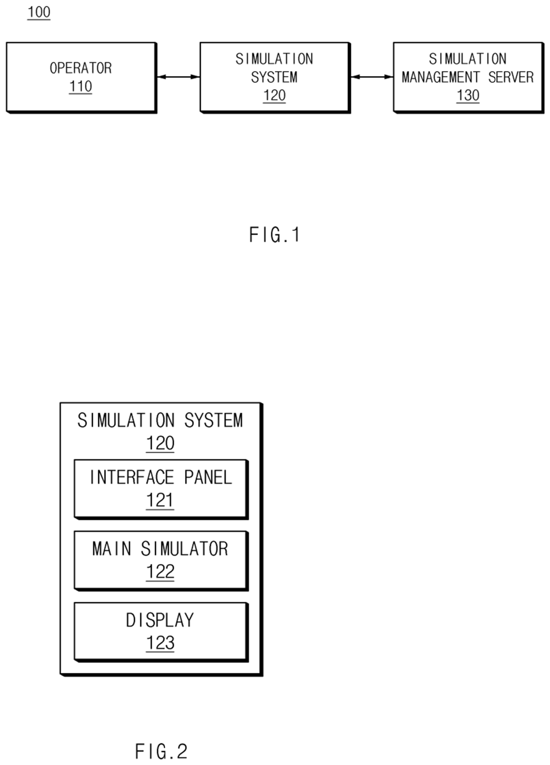

FIG. 1 illustrates elements constituting a training system according to some embodiments.

Referring to FIG. 1, a training system 100 may include a simulation system 120 and a simulation management server 130. However, the present document is not limited thereto, and some components may be omitted from the training system 100, or other general-purpose components may be further included in the training system 100.

The training system 100 may provide simulation training on a battery manufacturing process to an operator 110. According to an embodiment, the battery manufacturing process may include a manufacturing process of a cylindrical battery, and a manufacturing process of the cylindrical battery may include a battery activation process such as an EOL (end of line) process. The operator 110 may virtually experience the battery manufacturing process through interaction with the simulation system 120.

A simulation management server 130 may be configured to manage a training content provided by the simulation system 120. The simulation management server 130 may record the result of performing the training content, derive statistical data based on the result, add or change the substance of the training content based on the statistical data, and transmit the added or changed information to the simulation system 120. According to an embodiment, the simulation management server 130 may install content management software in the simulation system 120 and provide update information of the content management software.

FIG. 2 illustrates elements constituting a simulation system according to some embodiments.

Referring to FIG. 2, the simulation system 120 may include an interface panel 121, a main simulator 122, and a display 123. However, the present document is not limited thereto, and some components may be omitted from the simulation system 120, or other general-purpose components may be further included in the simulation system 120.

According to an embodiment, in the simulation system 120, the interface panel 121, the main simulator 122, and the display 123 may be electrically connected through a device-to-device communication method such as a bus, a general purpose input and output (GPIO), a serial peripheral interface (SPI), a mobile industry processor interface (MIPI), or the like.

The interface panel 121 may provide an interface function between the operator 110 and the simulation system 120. According to an embodiment, the interface panel 121 may include a human machine interface (HMI) type panel. The interface panel 121 may receive a manipulation input for manipulating the simulation system 120 from the operator 110 through an input device, such as a touch input, a button input, an input, or the like, and display a graphic interface such as a screen that assists to selecting the manipulation input.

The main simulator 122 may be configured to execute simulation on the battery manufacturing process. The main simulator 122 may interact with the operator 110 to perform the simulation. For example, the main simulator 122 may receive a touch input or drag input from the operator 110, change a progress state of the EOL process accordingly, and display the changed progress state to the operator 110. The main simulator 122 may include a processor and memory for executing simulation software.

A processor of the main simulator 122 may have a structure for executing commands which implement operations of the main simulator 122. The processor may be implemented as an array of multiple logic gates or a general-purpose microprocessor for processing various calculations and configured as a single processor or a plurality of processors. For example, the processor may be implemented in the form of at least one of a microprocessor, a CPU, a GPU, and an AP.

The memory and/or a storage may be configured to temporarily store data or commands and may be configured separately or integrally with the processor. The processor may process various types of calculations by executing the commands stored in the memory and/or the storage. The memory and/or the storage may store various types of data, commands, software, mobile applications, computer programs, and the like. For example, the memory and/or the storage may be implemented as a non-volatile device such as a read only memory (ROM), a programmable ROM (PROM), an erasable PROM (EPROM), an electrically EPROM (EEPROM), a flash memory, a programmable random access memory (PRAM), a magnetoresistive RAM (MRAM), a resistive RAM (RRAM), or a ferroelectric RAM (FRAM), or a volatile device such as a dynamic RAM (DRAM), a static RAM (SRAM), a synchronous dynamic RAM (SDRAM), or a phase change RAM (PRAM), and implemented in the form of a hard disk drive (HDD), a solid-state drive (SSD), a secure digital (SD), a Micro-SD, or a combination thereof.

The display 123 may include a display device for providing various types of visual information to the operator 110. The display 123 may display images of the simulation being executed on the main simulator 122. For example, when the EOL process is performed in the main simulator 122, an external image which may be visually recognized may be displayed on the main simulator 122, and an image of an invisible area, which cannot be recognized, may be displayed on the display 123.

The interface panel 121 may be configured to receive the manipulation input from the operator 110. The operator 110 may generate the manipulation input through a touch input, a button input, a mouse input, or the like. The manipulation input may be used to drive the main simulator 122, select items, adjust process conditions, and the like. According to an embodiment, the interface panel 121 may be manipulated in the same manner as an equipment manipulation panel used in an actual manufacturing line.

The main simulator 122 may be configured to load a training content which reproduces an EOL process for manufacturing a cylindrical battery based on the manipulation input. For example, the training content may be booted through the manipulation input, and the training content may include a training simulation which reconstructs the EOL process in the same manner as reality. According to an embodiment, the EOL process reproduced by the training content may be an activation process for completing the manufacturing of a cylindrical battery.

The main simulator 122 may be configured to provide the training content to the operator 110 through the interaction with the operator 110. For example, the operator 110 may indirectly experience works of the EOL process through the training content. According to an embodiment, the operator 110 may apply an input, such as touch and drag, to the main simulator 122, and thus training contents on a process of measuring internal resistance (IR) and/or open circuit voltage (OCV) of a cylindrical battery, a process of inspecting an appearance of a cylindrical battery for defect sorting, a process of packaging a cylindrical battery, and the like may be provided to the operator 110.

According to an embodiment, the input to be applied to the equipment manipulation panel in the actual manufacturing line may be implemented as an input to the interface panel 121, and an operation of the operator 110, which needs to be directly performed in the actual manufacturing line, may be implemented by the input to the main simulator 122.

The display 123 may be configured to display specific images according to specific processes of the EOL process. For example, the display 123 may display, as specific images, a state in which the operator 110 inputs packaging materials, an operation process of packaging equipment according to the input state of the packaging materials, a shape of packaging results, and the like.

According to an embodiment, the specific processes may include a first process of measuring the IR and OCV of a cylindrical battery, a second process of inspecting an appearance of the cylindrical battery to sort good and defective products, and a third process of packaging the cylindrical battery using packaging materials. The training content provided by the simulation system 120 may be configured to train the specific processes of the EOL process for the operator 110. The manufacturing process may be completed through the first process, the second process, and the third process, and the cylindrical battery may be shipped.

According to an embodiment, the training content may include a guide content for the specific processes, a virtual operation content for the specific processes, a condition adjustment content for process conditions of the specific processes, and a proficiency test content for the specific processes. The guide content may provide the operator 110 with information about work knowledge, manuals, equipment manipulation methods, and the like, which are required to perform the specific processes of the EOL process. The virtual operation content may virtually provide works to be performed by the operator 110 in an actual process line. The condition adjustment content may allow the operator 110 to adjust process conditions of the specific processes of the EOL process and provide the operator 110 with information about how working results change due to the adjusted process conditions. The proficiency test content may test whether the operator 110 is ready to perform the specific processes of the EOL process in the actual process line.

According to an embodiment, the virtual operation content for the second process may include a false defect sorting content which sorts cylindrical cells which are classified as good products in the first process but are actually defective products. Through the first process, the IR and OCV of the cylindrical battery may be measured. Based on values of the IR and the OCV, it may be determined whether the cylindrical battery is defective. However, even when it is determined that the cylindrical battery is good, a false defect in which the cylindrical battery corresponds to a defective product in appearance may actually occur. The operator 110 performs such appearance inspection on an actual EOL line, and the false defect sorting content may be provided to virtually train the appearance inspection.

According to an embodiment, the condition adjustment content for the first process may include a parameter adjustment content which adjusts parameters of the first process to adjust a ratio of the cylindrical battery which is actually a defective product but classified as a good product and a ratio of the cylindrical battery which is actually a good product but classified as a defective product. For example, the first process may be performed using IR/OCV equipment for measuring the IR and OCV of the cylindrical battery. The IR/OCV equipment may have various process parameters, such as a measurement frequency. The operator 110 may change process parameters of the IR/OCV equipment through the parameter adjustment content and confirm estimated values for the ratio of the cylindrical battery which is actually a defective product but classified as a good product and the ratio of the cylindrical battery which is actually a good product but classified as a defective product. In such a manner, the operator 110 may train the work of changing the process parameters of the IR/OCV equipment through the parameter adjustment content.

According to an embodiment, the virtual operation content for the third process may include a content which allows the operator 110 to input packaging materials for packaging a cylindrical battery, a content which represents the input state of the packaging materials input by the operator 110, and a content which represents a form of packaging results of the cylindrical battery to be packaged according to the input state. For example, the packaging materials may include an in-box, a moisture proof agent, a collision prevention tray, a packaging tape, an out-box, ink, a label, and the like. When the operator 110 does not input the packaging materials in an appropriate position, direction, and order, the operation of the equipment for packaging cylindrical cells with the packaging materials may not be performed accurately, which may result in packaging defects. To train the operator 110 to input the packaging materials to prevent the occurrence of such packaging defects, how packaging results are formed according to the input state of the packaging materials may be displayed.

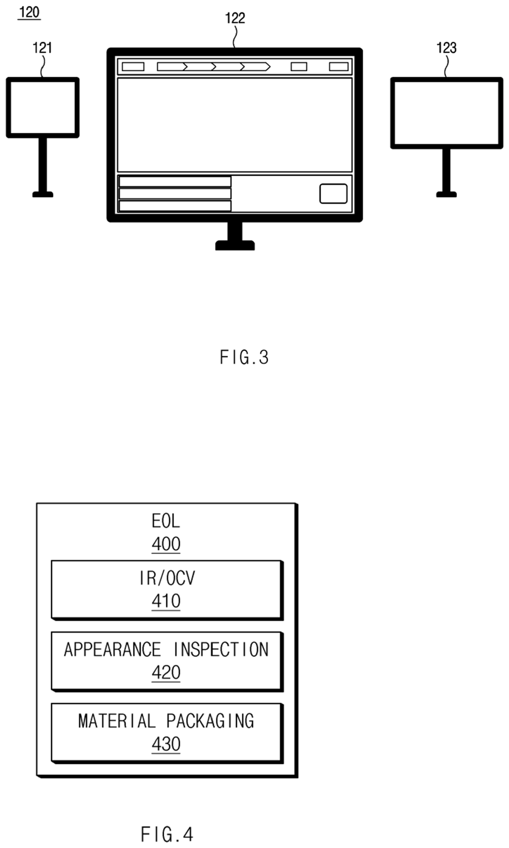

FIG. 3 illustrates a structure of the simulation system according to some embodiments.

Referring to FIG. 3, in the simulation system 120, the interface panel 121 may be disposed at a left side of the main simulator 122, and the display 123 may be disposed at a right side of the main simulator 122. However, the present document is not limited thereto, and a different arrangement structure may be applied depending on a body structure or movement line of the operator 110.

The operator 110 may generate a manipulation input for manipulating virtual equipment of the main simulator 122 on the interface panel 121 disposed at the left side of the main simulator122, train the simulation content through the touch and drag inputs to the main simulator 122 disposed at a central portion thereof, and confirm specific images of the EOL process through the display 123 disposed at the right side thereof.

FIG. 4 illustrates specific processes of an end of line (EOL) process according to some embodiments.

Referring to FIG. 4, specific processes of an EOL process 400 may include an IR/OCV 410, appearance inspection 420, and material packaging 430. However, the present document is not limited thereto, and various other specific processes for activating a cylindrical battery through the EOL process 400 may be considered additionally.

The IR/OCV 410 may be a process for measuring the IR and OCV of the cylindrical cell. In an actual process line, the IR/OCV 410 may be performed by IR/OCV equipment, and measurement parameters of the IR/OCV equipment may be adjusted. In the training content of the simulation system 120, the IR/OCV equipment may be implemented virtually, and the operator 110 may train the IR/OCV 410 through virtual 3D IR/OCV equipment.

The appearance inspection 420 may be a process of inspecting appearance defects of a cylindrical cell which is diagnosed as a defective cell in terms of the IR and/or OCV through the IR/OCV 410. For example, even when the cylindrical cell has appropriate values of the IR and OCV, it may be determined that the cylindrical cell which has cracks, impurities, dents, and the like in appearance is a defective cell with a risk of accident. To train various cases of appearance defects, the appearance inspection 420 may be trained through the simulation system 120.

The material packaging 430 may be a process for packaging a cylindrical cell for which the appearance inspection 420 is completed as a finished product. The cylindrical cell may be packaged by packaging materials. In an actual process line, the packaging materials may be disposed in an appropriate position and direction by the operator 110, and the packaging equipment may perform the work of packaging the cylindrical cell with the packaging materials. However, when the packaging materials are disposed in an inappropriate position, order, or direction, defective packaging results may be formed, and to prevent this, the operator 110 may learn the material packaging 430 through the simulation system 120.

The EOL process 400 provided to the operator 110 through the simulation system 120 may further include training on countermeasures when an equipment error occurs. For example, when packaging materials are insufficient or the cause for an emergency equipment stoppage occurs in an actual process line, an equipment error may occur, and the operator 110 needs to identify the cause of the process equipment stoppage and restart the equipment. To train this, various scenarios of equipment errors and stoppage cases may be provided through the simulation system 120. For example, the operator 110 may learn resupply of packaging materials, resolution of safety issues, restart of equipment, and the like through an error countermeasure content.

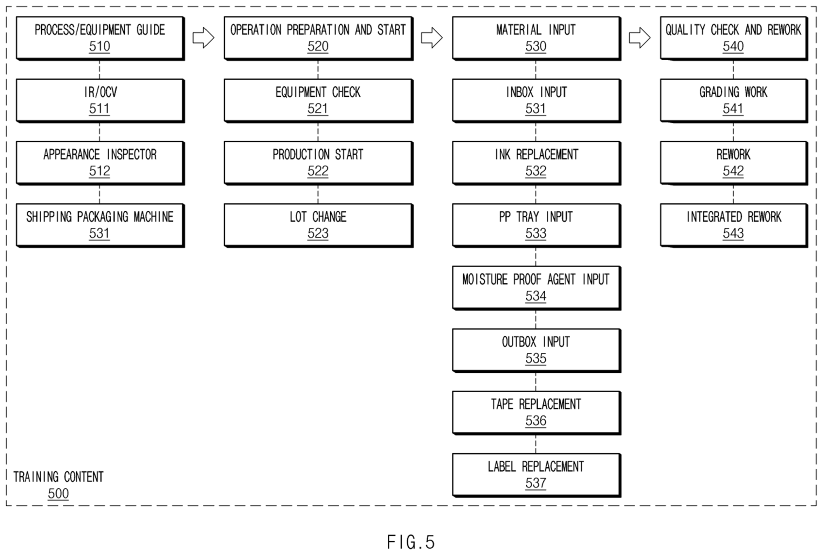

FIG. 5 illustrates a training content provided by the simulation system according to some embodiments.

Referring to FIG. 5, a training content 500 may include process/equipment guide 510, operation preparation and start 520, material input 530, and quality check and rework 540.

The process/equipment guide 510 may include equipment operation manuals, manipulation methods, and the like for IR/OCV equipment 511, an appearance inspector 512, and a shipping packaging machine 513. According to an embodiment, the appearance inspection of the EOL process may be performed by the appearance inspector instead of being performed directly by the operator 110. Alternatively, the appearance inspection may be performed by both the operator 110 and the appearance inspector.

The operation preparation and start 520 may include equipment check 521, production start 522, and LOT change 523. The material input 530 may include inbox input 531, ink replacement 532, polypropylene (PP) tray input 533, a moisture proof agent input 534, outbox input 535, tape replacement 536, label replacement 537, and the like. The quality check and rework 540 may include grading work 541, rework 542, and integrated rework 543, and the like.

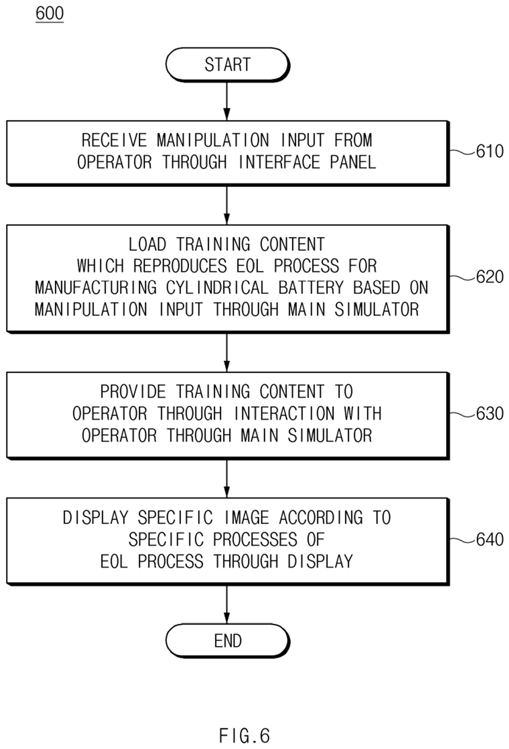

FIG. 6 illustrates operations forming a method of a simulation system according to some embodiments.

Referring to FIG. 6, the operating method 600 of a simulation system may include operations 610 to 640. However, the present document is not limited thereto, and some operations may be omitted or general-purpose operations may be added, and operations of the operating method 600 of the simulation system 100 may be executed in a different order from the shown order.

The operating method 600 of the simulation system may include operations performed in time series by the simulation system 120. Therefore, even when contents are omitted below, the above-described contents for the simulation system 120 may be applied to the operating method 600 in the same manner.

Operations 610 to 640 of the operating method 600 of the simulation system may be performed by the interface panel 121, the main simulator 122, and the display 123 of the simulation system 120.

In operation 610, the simulation system 120 may receive a manipulation input from an operator.

In operation 620, the simulation system 120 may load a training content which reproduces an EOL process for manufacturing a cylindrical battery based on the manipulation input through the main simulator.

In operation 630, the simulation system 120 may provide the training content to the operator through interaction with the operator through the main simulator.

In operation 640, the simulation system 120 may display specific processes of the EOL process through the display.

According to an embodiment, the operating method 600 of the simulation system may be implemented in the form of a computer program stored in a computer-readable storage medium. That is, the computer program may include commands for implementing the operating method 600 of the simulation system, and the commands of the program may be stored in the computer-readable storage medium. The computer program may include a mobile application.

According to an embodiment, the computer-readable recording medium may include magnetic media such as a hard disk, a floppy disk, and a magnetic tape, optical media such as a CD-ROM and a DVD, and magneto-optical media such as a floptical disk, and hardware devices specifically configured to store and execute program commands, such as a ROM, a RAM, and a flash memory. The computer program commands may include machine language code generated by a compiler and high-level language code that may be executed by a computer using an interpreter, etc.

The terms such as "comprise," "constitute," or "have" described above mean that the corresponding component may be inherent unless otherwise stated, and thus should be construed as further including another component rather than excluding another component. All terms including technical or scientific terms have the same meaning as commonly understood by those skilled in the art to which the embodiments disclosed herein pertain unless defined otherwise. Commonly used terms, such as terms defined in a dictionary, should be construed as consistent with the contextual meaning of the related art and are not construed in an ideal or excessively formal meaning unless explicitly defined herein.

The above description is merely the exemplary description of the technical spirit disclosed herein, and those skilled in the art to which embodiments disclosed herein pertain will be able to variously modify and change the present document without departing from the essential characteristics of the embodiments disclosed herein. Therefore, the embodiments disclosed herein are not intended to limit the technical spirit disclosed herein, but for illustrative purpose, and the scope of the technical spirit disclosed herein is not limited by these embodiments. The scope of the technical spirit disclosed herein should be construed by the appended claims, and all technical spirits within the equivalent range should be construed as being included in the scope of the present document.

### [DESCRIPTION OF REFERENCE NUMERALS]

100: training system 110: operator
120: simulation system 121: interface panel
122: main simulator 123: display
130: management server 400: EOL process
500: training content

## Claims

1. A simulation system comprising:
an interface panel configured to receive a manipulation input from an operator;
a main simulator configured to load a training content which reproduces an end of line (EOL) process for manufacturing a cylindrical battery based on the manipulation input and provide the training content to the operator through interaction with the operator; and
a display configured to display a specific image according to specific processes of the EOL process.

2. The simulation system of claim 1, wherein the specific processes include a first process of measuring internal resistance and an open circuit voltage (OCV) of the cylindrical battery, a second process of inspecting an appearance of the cylindrical battery to sort a good product and a defective product, and a third process of packaging the cylindrical battery through packaging materials.

3. The simulation system of claim 2, wherein the training content includes a guide content for the specific processes, a virtual operation content for the specific processes, a condition adjustment content for process conditions of the specific processes, and a proficiency test content for the specific processes.

4. The simulation system of claim 3, wherein the virtual operation content for the second process includes a false defect sorting content which sorts a cylindrical cell which is classified as a good product in the first process but is actually a defective product.

5. The simulation system of claim 4, wherein the condition adjustment content for the first process includes a parameter adjustment content which adjusts parameters of the first process to adjust a ratio of the cylindrical battery which is actually a defective product but classified as a good product and a ratio of the cylindrical battery which is actually a good product but classified as a defective product.

6. The simulation system of claim 3, wherein the virtual operation content for the third process includes a content which allows the operator to input packaging materials for packaging the cylindrical battery, a content which represents the input state of the packaging materials input by the operator, and a content which represents a form of a packaging result of the cylindrical battery to be packaged according to the input state.

7. An operating method of a simulation system, comprising:
receiving a manipulation input from an operator through an interface panel;
loading a training content which reproduces an end of line (EOL) process for manufacturing a cylindrical battery based on the manipulation input through a main simulator;
providing the training content to the operator through interaction with the operator through the main simulator; and
displaying a specific image according to specific processes of the EOL process through a display.

8. The operating method of claim 7, wherein the specific processes include a first process of measuring internal resistance and an open circuit voltage (OCV) of the cylindrical battery, a second process of inspecting an appearance of the cylindrical battery to sort a good product and a defective product, and a third process of packaging the cylindrical battery through packaging materials.

9. The operating method of claim 8, wherein the training content includes a guide content for the specific processes, a virtual operation content for the specific processes, a condition adjustment content for process conditions of the specific processes, and a proficiency test content for the specific processes.

10. The operating method of claim 9, wherein the virtual operation content for the second process includes a false defect sorting content which sorts a cylindrical cell which is classified as a good product in the first process but is actually a defective product.

11. The operating method of claim 10, wherein the condition adjustment content for the first process includes a parameter adjustment content which adjusts parameters of the first process to adjust a ratio of the cylindrical battery which is actually a defective product but classified as a good product and a ratio of the cylindrical battery which is actually a good product but classified as a defective product.

12. The operating method of claim 9, wherein the virtual operation content for the third process includes a content which allows the operator to input packaging materials for packaging the cylindrical battery, a content which represents the input state of the packaging materials input by the operator, and a content which represents a form of a packaging result of the cylindrical battery to be packaged according to the input state.
